# FASCICULE DE BREVET EUROPEEN

(11) **EP 0 520 973 B1**
(45) Date de publication et mention de la délivrance du brevet: **13.09.1995**
(21) Numéro de dépôt: 92870092.1
(22) Date de dépôt: 24.06.1992
(51) Int. Cl.: G01J 1/04

(54) **Procédé de mesure de luminance et appareil pour la mise en oeuvre de ce procédé**
Verfahren und Vorrichtung zur Messung der Luminanz
Method and apparatus for measuring the luminance

(30) Priorité: 27.06.1991 BE 9100617
(43) Date de publication de la demande: 30.12.1992
(73) Titulaire: FINANCIERE DES APPLICATIONS DE L'ELECTRICITE S.A., B-1190 Bruxelles (BE)
(72) Inventeur: Schreder, Francis Jules, B-1630 Linkebeek (BE)
(74) Mandataire: Thirion, Robert

(56) Documents cités:
- DE-B- 1 192 846
- FR-A- 1 214 121
- FR-A- 2 490 363
- GB-A- 439 224
- US-A- 2 046 665

## Description

La présente invention a pour objet un procédé de mesure de luminance en particulier la mesure de la luminance extérieure dans la zone d'accès d'un tunnel dans lequel circulent des véhicules et à partir de laquelle on déduit la luminance minimum à programmer dans le tunnel, à l'aide d'une cellule photosensible disposée dans un tube borgne de manière à être sensible à des luminances comprises dans un cône défini par le centre de la cellule qui est situé sur l'axe du tube et qui constitue le sommet dudit cône et par au moins l'ouverture du tube.

On sait que le niveau de luminance intérieure dans un tunnel, surtout dans la zone d'entrée de ce dernier, doit être adapté au niveau de luminance extérieure régnant dans la zone d'accès du tunnel et ce, pour que les usagers pénétrant dans le tunnel conservent un niveau de visibilité correct.

On a déjà pensé à mesurer cette luminance extérieure, voir document "Adaption Luminance when approaching a tunnel in daytime", W.K. Adrian, Doctor Ingeneer-University of Waterloo at Waterloo, Ontario Canada, February 20, 1987, généralement dénommée luminance d'adaptation de l'automobiliste, afin d'en déduire la luminance minimum à programmer dans le tunnel, suivant deux procédés distincts, à savoir :
- un premier procédé, connu sous l'appellation L _{20°}, suivant lequel la luminance dans la zone d'accès d'un tunnel est considérée comme constante et correspond à la moyenne arithmétique des luminances comprises dans un cône de révolution d'ouverture de 20°, ce qui correspond pratiquement au champ de vision d'un automobiliste, qui est limité par les bords du pare-brise de son véhicule.

La mise en oeuvre de ce procédé est réalisée par un luminancemètre, utilisé dans le dispositif de commande de l'éclairage des tunnels, dont la courbe de réponse est constante entre 0 et 20°, ce luminancemètre étant essentiellement constitué par une cellule photosensible disposée au fond d'un tube, de section circulaire, pour que son centre soit situé sur l'axe dudit tube, les 20° d'ouverture du cône précité étant, d'une part, définis par le centre de la cellule photosensible et le bord du tube délimitant son ouverture et, d'autre part, obtenus par un ensemble de diaphragmes, d'ouvertures différentes dont les surfaces sont dégressives à partir de l'ouverure du tube, disposés dans le tube perpendiculairement à l'axe de ce dernier.

Ce procédé L _{20°}, s'il a l'avantage de la simplicité, présente l'inconvénient de ne pas répondre physiologiquement, de façon précise, au phénomène de la luminance d'adaptation de l'oeil humain.
- un second procédé, dénommé L _{seq}, basé sur le fait que la détermination de la luminance à laquelle l'oeil de l'automobiliste est physiologiquement adapté dans la zone d'accès d'un tunnel est fondamentale pour en déduire la luminance nécessaire dans le tunnel et principalement à l'entrée de celui-ci.

Le facteur qui influence la luminance d'adaptation est la luminance de voile équivalente (L _{seq}) à la luminance produite par les différentes luminances existantes dans le champ de vision du conducteur d'un véhicule.

Suivant des expérimentateurs connus, tels que STILES, HOLLADAY et FRY, ladite luminance L _{seq} répond à la loi suivante : la luminance L _{seq} est proportionnelle à l'éclairement produit sur l'oeil par les différentes luminances présentes dans le champ de vision de cet oeil et est inversément proportionnelle au carré de l'angle formé par la direction d'observation avec la source ébouissante.

Ce procédé consiste donc, pour la mesure de la luminance qui déterminera la luminance à l'entrée d'un tunnel, à prendre en considération les différentes luminances existant dans le champ de vision du conducteur d'un véhicule. Le luminancemètre capable d'effectuer la mesure précitée, suivant la loi énoncée ci-dessus, nécessite une lentille (connue sous le nom de lentille de FRY) qui est d'une grande complexité et d'un coût très élevé, ce qui présente l'inconvénient de freiner l'application dudit procédé et l'utilisation d'un tel luminancemètre.

L'invention a pour but de procurer un procédé, du type du second procédé susdit, qui permet la détermination de la luminance à laquelle l'oeil de l'automobiliste est physiologiquement adapté à l'approche d'un tunnel et ce, sans faire appel à du matériel particulièrement complexe et coûteux comprenant la lentille de FRY précitée, ce qui devrait permettre une généralisation dudit procédé.

A cet effet, suivant l'invention, ce procédé consiste à limiter le nombre des rayons lumineux pénétrant dans le tube suivant le cône précité.

Suivant une forme de réalisation avantageuse de l'invention, on limite sélectivement le nombre des rayons admis dans le cône précité en fonction de leur angle d'incidence.

Suivant un mode de réalisation particulièrement avantageux de l'invention, le nombre des rayons lumineux admis dans le cône précité décroît progressivement quand leur angle d'incidence augmente.

L'invention est également relative à un appareil pour la mise en oeuvre du procédé précité.

Suivant l'invention, cet appareil comprend un tube borgne, une cellule photosensible disposée à l'intérieur de ce dernier pour que, d'une part, son centre soit situé sur l'axe dudit tube et, d'autre part, ce centre et l'ouverture du tube définissent le cône précité et un écran opaque agencé dans le tube, à proximité de l'ouverture de celui-ci, pour intercepter la totalité des rayons lumineux pouvant influencer la cellule et compris dans le cône précité, cet écran étant pourvu de zones qui permettent à des rayons lumineux déterminés de pénétrer à l'intérieur du cône susdit pour influencer la cellule précitée.

D'autres détails et particularités de l'invention ressortiront de la description des dessins, annexés au présent mémoire, qui illustrent le procédé susdit et représentent, à titre d'exemple non limitatif, une forme de réalisation particulière de l'appareil suivant l'invention.

La figure 1 est une vue en élévation et en coupe de l'appareil précité pour la mise en oeuvre du procédé suivant l'invention.

La figure 2 est une vue en coupe, suivant la ligne II-II de la figure 1, montrant, en détail, et à plus grande échelle que celle de la figure 1, l'écran précité agencé dans l'appareil.

La figure 3 est un tableau sur lequel figurent, à titre comparatif, les courbes de réponse de luminancemètres fonctionnant suivant les procédés précités.

Dans les différentes figures, les mêmes notations de référence désignent des éléments identiques.

Le procédé de mesure de luminance suivant l'invention et illustré aux dessins est particulièrement destiné à la mesure de la luminance extérieure dans la zone d'accès d'un tunnel pour véhicules et à partir de laquelle on déduit la luminance minimum à programmer dans le tunnel et plus particulièrement à l'entrée de celui-ci à mesure de luminance qui s'effectue à l'aide d'une cellule photosensible 1 disposée dans un tube borgne 2 de façon à être sensible à des luminances comprises dans un cône défini par le centre 3 de la cellule photosensible 1 qui est situé sur l'axe 4 du tube de section circulaire 2 et qui constitue le sommet de ce cône, par l'ouverture 5 dudit tube 2 et par des diaphragmes 6 d'ouvertures 7 dégressives à partir de l'ouverture 5 du tube, ces derniers ayant principalement pour but d'éviter les réflexions parasites de rayons frappant les parois intérieures du tube 2.

Ce procédé consiste à limiter le nombre de rayons lumineux pénétrant dans le tube 2 suivant le cône précité, qui est dans l'exemple illustré aux dessins un cône de révolution dont l'axe est confondu avec l'axe 4 du tube. On limite sélectivement le nombre de rayons admis dans ledit cône en fonction de leur angle d'incidence de manière à ce que le nombre des rayons admis décroisse progressivement quand leur angle d'incidence augmente.

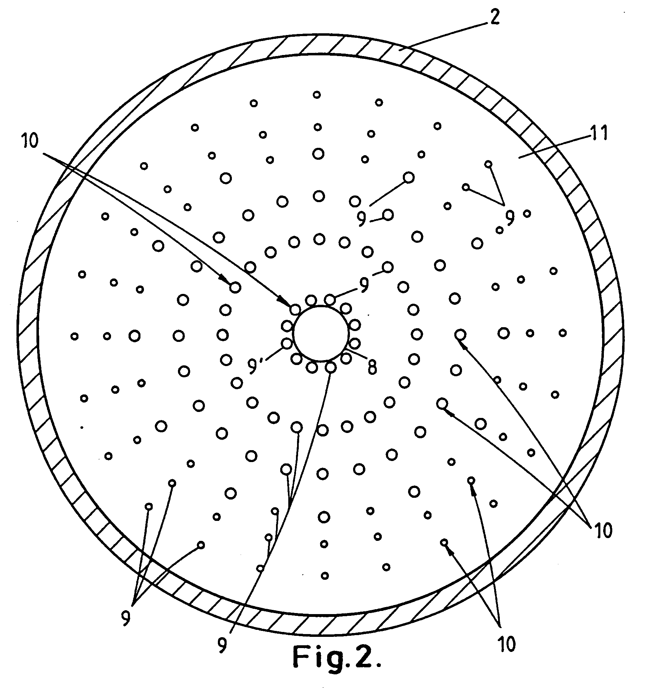

Comme illustré à la figure 2, on autorise avantageusement l'admission des rayons lumineux, en 8, dans le cône précité, qui aura une ouverture de l'ordre de 36°, suivant son axe, les rayons incidents y étant admis en des endroits 9 qui sont répartis régulièrement suivant des cercles 10 dont les centres sont situés sur l'axe 4 du tube.

Les superficies des endroits 9 précités par lesquels sont admis les rayons incidents sont sensiblement égales sur chacun des cercles 10, tandis que ces superficies sont décroissantes au fur et à mesure que les diamètes de ces cercles 10 augmentent. Ces endroits sont avantageusement répartis dans un plan perpendiculaire à l'axe 4 du tube 2 et suivant les cercles 10 précités qui sont concentriques, lesdits endroits 9 étant en outre alignés radialement.

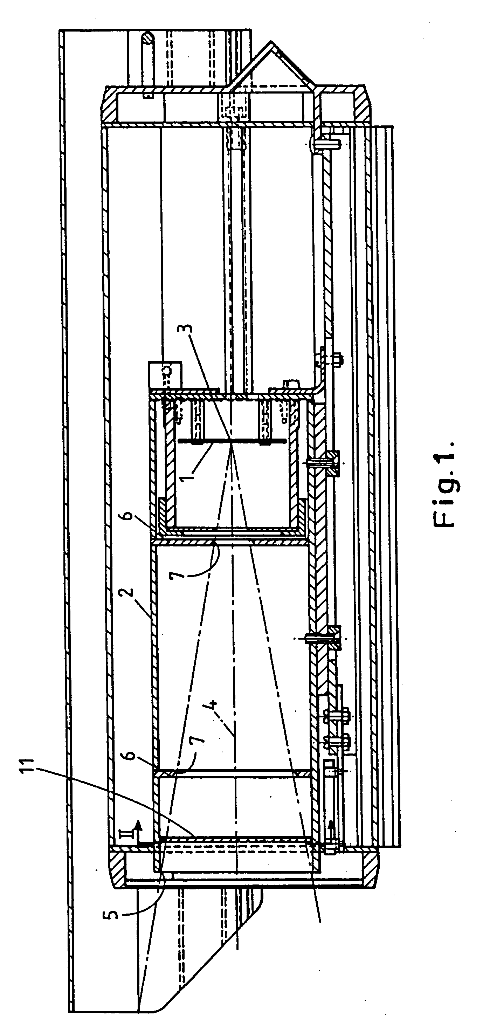

L'appareil de mesure de luminance suivant l'invention et représenté aux figures 1 et 2 comprend le tube borgne 2 susdit qui est de section circulaire, la cellule photosensible 1 précitée qui est disposée à l'intérieur du tube 2 pour, d'une part, que son centre 3 soit situé sur l'axe 4 dudit tube et, d'autre part, que ce centre 3 et l'ouverture 5 du tube définissent le cône précité, et un écran opaque 11 fixé dans le tube 2, à proximité de son ouverture 5, pour intercepter la totalité des rayons lumineux pouvant influencer la cellule 1 et compris dans ledit cône, ledit écran 11 étant pourvu de zones 9, constituant les endroits précités, qui permettent à des rayons lumineux déterminés de pénétrer à l'intérieur du cône susdit pour influencer la cellule photosensible 1. Cet écran 11 est un disque plan qui est disposé dans le tube 2, de section circulaire, sensiblement perpendiculairement à l'axe de ce dernier.

Les zones 9 précitées dudit écran 11 sont circulaires et se répartissent en une zone centrale 9′ dont le centre est situé sur l'axe 4 du tube 2 et des zones 9 régulièrement réparties suivant des cercles concentriques à la zone centrale 9′. Les diamètres des zones 9 situées sur un même cercle 10 sont sensiblement égaux et les diamètres des zones 9 situées sur les cercles 10 les plus proches de la périphérie de l'écran 11 vont en décroissant au fur et à mesure que les diamètres de ces cercles 10 augmentent.

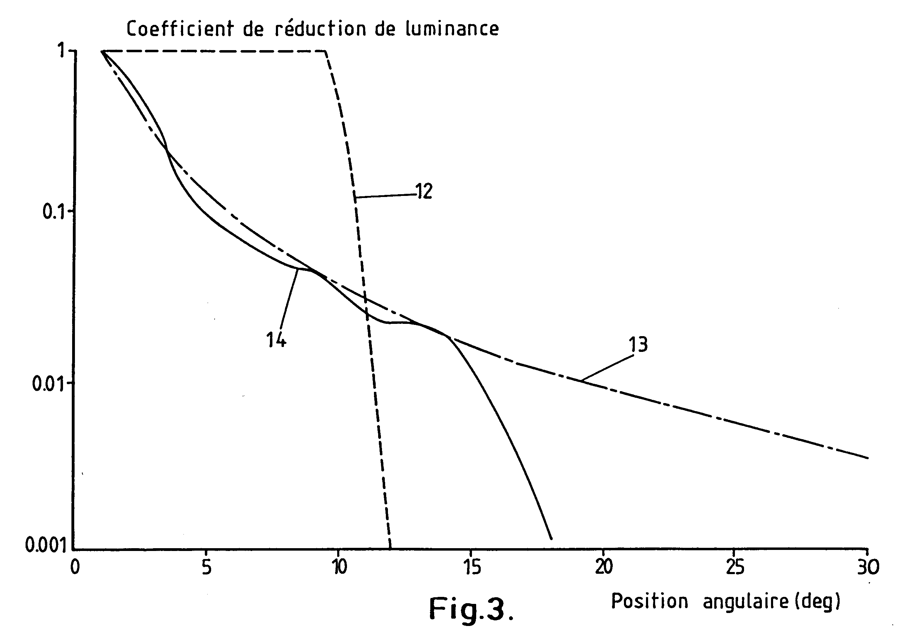

La figure 3 permet de comparer, à l'aide de trois courbes de réponse 12, 13, 14 obtenues avec des luminacemètres mettant en oeuvre, pour la courbe 12, le procédé L _{20°} susdit et, pour les courbes 13 et 14, le procédé L _{seq} précité, la courbe 13, considérée comme idéale à l'heure actuelle, étant obtenue à l'aide d'un appareil muni de la lentille de FRY précitée, la courbe 14, équivalente à ladite courbe 13, étant obtenue à l'aide de l'appareil suivant l'invention.

Pour obtenir cette courbe de réponse 14, on a muni l'appareil d'un écran 11 dont les zones 9 qui entourent la zone centrale 9′ sont réparties suivant six cercles 10 dont le premier, de plus petit diamètre, a un diamètre légèrement supérieur au diamètre de la zone centrale 9′. La distance qui sépare le premier cercle du deuxième est sensiblement égale au diamètre de la zone centrale 9′, tandis que les distances qui séparent les quatre autres cercles 10 sont sensiblement égales, le sixième cercle, qui a le plus grand diamètre, définissant avec le centre 3 de la cellule photosensible 1 un cône dont l'ouverture est de l'ordre de 36°.

Les zones 9 réparties sur les deuxième au sixième cercle sont alignées radialement de manière à ce que les angles formés par les rayons soient sensiblement égaux et de l'ordre de 15°. Pour un écran 11 dont la surface est de 5.944 mm², la surface de la zone centrale 9′ est de l'ordre de 46 mm² tandis que les surfaces de chacune des zones 9 réparties suivant les premier au sixième cercles 10 sont respectivement de 0,65 mm², 0,65 mm², 0,65 mm², 0,43 et 0,65 mm² alternativement, 0,43 mm² et 0,43 mm², la superficie totale des zones 9 et 9′ étant de l'ordre de 103 mm².

L'écran 11 est soit réalisé en une matière translucide, telle que du verre, partiellement opacifiée, par exemple, par sérigraphie, soit consituté par une tôle percée de trous qui forment les zones 9 et 9′ précitées.

Il doit être entendu que l'invention n'est nullement limitée à la forme de réalisation décrite et que bien des modifications peuvent être apportées à cette dernière sans sortir du cadre des revendications.

## Revendications

1. Procédé de mesure de luminance, en particulier la mesure de la luminance extérieure dans la zone d'accès d'un tunnel dans lequel circulent des véhicules et à partir de laquelle on déduit la luminance minimum à programmer dans le tunnel, à l'aide d'une cellule photosensible (1) disposée dans un tube borgne (2) de manière à être sensible à des luminances comprises dans un cône défini par le centre (3) de la cellule qui est situé sur l'axe (4) du tube et qui constitue le sommet dudit cône et par au moins l'ouverture (5) du tube, caractérisé en ce qu'il consiste à limiter le nombre des rayons lumineux pénétrant dans le tube (2) suivant le cône précité.

2. Procédé de mesure suivant la revendication 1, caractérisé en ce qu'on limite sélectivement le nombre des rayons admis dans le cône précité en fonction de leur angle d'incidence.

3. Procédé de mesure suivant la revendication 2, caractérisé en ce que le nombre des rayons lumineux admis dans le cône précité décroît progressivement quand leur angle d'incidence augmente.

4. Procédé suivant l'une quelconque des revendications 1 à 3, caractérisé en ce que le cône susdit est un cône de révolution, l'ouverture (5) du tube étant ciruclaire.

5. Procédé de mesure suivant la revendication 4, caractérisé en ce qu'on autorise l'admission des rayons lumineux dans le cône précité suivant l'axe de celui-ci, les rayons lumineux incidents étant admis dans le cône en des endroits (9) répartis régulièrement suivant des cercles (10) dont les centres sont situés sur l'axe (4) du tube (2).

6. Procédé de mesure suivant la revendication 5, caractérisé en ce que les superficies des endroits (9) par lesquels sont admis les rayons lumineux incidents dans le cône susdit et qui sont répartis suivant les cercles (10) précités sont égales pour chaque cercle, ces superficies étant décroissantes au fur et à mesure que les diamètres des cercles (10) augmentent.

7. Procédé de mesure suivant l'une ou l'autre des revendications 5 et 6, caractérisé en ce que les endroits (9) susdits sont répartis dans un plan perpendiculaire à l'axe (4) du tube (2) et suivant les cercles (10) qui sont concentriques, ces endroits (9) étant sensiblement alignés radialement.

8. Procédé de mesure suivant l'une quelconque des revendications 4 à 7, caractérisé en ce que le cône précité a une ouverture de l'ordre de 36°.

9. Appareil de mesure de luminance pour la mise en oeuvre du procédé suivant l'une quelconque des revendications 1 à 8, caractérisé en ce qu'il comprend un tube borgne (2), une cellule photosensible (1) disposée à l'intérieur de ce dernier pour que, d'une part, son centre (3) soit situé sur l'axe (4) dudit tube et, d'autre part, ce centre (3) et l'ouverture (5) du tube définissent le cône précité et un écran opaque (11) agencé dans le tube (2), à proximité de l'ouverture (5) de celui-ci, pour intercepter la totalité des rayons lumineux pouvant influencer la cellule et compris dans le cône précité, cet écran (11) étant pourvu de zones (9) qui permettent à des rayons lumineux déterminés de pénétrer à l'intérieur du cône susdit pour influencer la cellule (1) précitée.

10. Appareil suivant la revendication 9, caractérisé en ce que l'écran (11) susdit est plan et disposé dans le tube (2) sensiblement perpendiculairement à l'axe (4) de ce dernier.

11. Appareil suivant l'une ou l'autre des revendications 9 et 10, caractérisé en ce que le tube (2) est de section circulaire.

12. Appareil suivant la revendication 11, caractérisé en ce que les zones (9) susdites de l'écran sont circulaires et se répartissent en une zone centrale (9′) coaxiale au tube (2) et des zones (9) régulièrement réparties suivant des cercles (10) concentriques à ladite zone centrale.

13. Appareil suivant la revendication 12, caractérisé en ce que les diamètres des zones situées sur un même cercle (10) sont sensiblement égaux.

14. Appareil suivant l'une ou l'autre des revendications 12 et 13 caractérisé en ce que les diamètres des zones (9) situées sur les cercles (10) les plus proches de la périphérie de l'écran (11) vont en décroissant au fur et à mesure que les diamètres des cercles augmentent.

15. Appareil suivant l'une quelconque des revendications 12 à 14, caractérisé en ce que les zones (9) susdites de l'écran entourant la zone centrale précitée (9′) sont réparties suivant six cercles (10) dont le premier, de plus petit diamètre, a un diamètre légèrement supérieur au diamètre de la zone centrale (9′) précitée, la distance séparant le premier cercle du deuxième cercle étant sensiblement égale au diamètre de ladite zone centrale (9′), tandis que les distances qui séparent les quatre autres cercles (10) sont sensiblement égales, le sixième cercle, de plus grand diamètre, définissant avec le centre (3) de la cellule (1) un cône d'ouverture de l'ordre de 36°.

16. Appareil suivant la revendication 15, caractérisé en ce qu'au moins les zones (9) précitées réparties sur les deuxième au sixième cercle sont sensiblement alignés radialement, les angles formés par les rayons étant sensiblement égaux et de l'ordre de 15°.

17. Appareil suivant l'une ou l'autre des revendications 15 et 16, caractérisé en ce que la surface de la zone centrale (9′) susdite est, pour un écran (11) dont la surface est de 5.944 mm², de l'ordre de 46 mm², les surfaces des zones (9) susdites réparties suivant les premier au sixième cercles (10) étant respectivement de 0,65 mm², 0,65 mm², 0,65 mm², 0,43 et 0,65 mm² alternativement, 0,43 mm² et 0,43 mm², la superficie totale des zones précitées (9 et 9′) étant de l'ordre de 103 mm².

18. Appareil suivant l'une quelconque des revendications 9 à 17, caractérisé en ce que l'écran (11) susdit est réalisé en une matière translucide,telle que le verre, partiellement opacifiée par sérigraphie.

19. Appareil suivant l'une quelconque des revendications 9 à 17, caractérisé en ce que l'écran (11) précité est constitué par une tôle percée de trous qui forment les zones précitées.

## Claims

1. Method of measuring light levels, particularly the measurement of exterior light levels in the zone of approach to a tunnel in which vehicles are moving, and from which exterior light levels the minimum light level to be programed inside the tunnel can be derived, by means of a photo-sensitive cell (1) installed in a recessed tube (2), so arranged as to sense light levels contained within a cone defined by center (3) of the cell, which is located on axis (4) of the tube and which constitutes the apex of said cone, and by at least the open end (5) of the tube, characterized in that it consists in limiting the quantity of light rays entering into tube (2) via the aforesaid cone.

2. Method of measurement in accordance with Claim 1, characterized in the quantity of rays entering into said cone are limited in accordance with the angle of incidence of these rays.

3. Method of measurement in accordance with Claim 2, characterized in that the quantity of light rays allowed to enter the aforesaid cone progressively decreases as the incidence angle of these rays increases.

4. Method in accordance with Claim 1, characterized in that said cone is a cone of revolution, opening (5) of the tube being circular.

5. Method of measurement in accordance with Claim 4, characterized in that light rays are allowed to enter aforesaid cone along the axis of the cone, the incident light rays being allowed to enter the cone through spots (9) which are evenly distributed around circles (10), the centers of which are located on axis (4) of tube (2).

6. Method of measurement in accordance with Claim 5, characterized in that the surface areas of spots (9), through which incident light rays are allowed to enter into said cone and which are distributed in the above-mentioned circles (10), are equal for each circle, the surface areas of these spots (9) progressively decreasing as the diameters of the circles (10) increase.

7. Method of measurement in accordance with Claim 6, characterized in that spots (9) are distributed in a plane that is perpendicular to axis (4) of tube (2) in concentric circles (10), the spots being substantially aligned in the radial direction.

8. Method of measurement in accordance with Claim 4, characterized in that aforesaid cone has an opening of approximately 36°.

9. Light level measuring device for implementing the method in accordance with Claim 1, characterized in that it incorporates a recessed tube (2), a photo-sensitive cell (1) installed inside the tube such that, on the one hand, center (3) of the cell is located on axis (4) of said tube and, on the other hand, center (3) and opening (5) define aforesaid cone and an opaque screen (11), fitted in tube (2) near the open end (5) of the tube for intercepting all light rays capable of striking the cell and included in said cone, said screen (11) displaying spots (9) which allow selected light rays to enter inside said cone in order to strike aforesaid cell (1).

10. Device in accordance with Claim 9, characterized in that said screen (11) is flat and installed in tube (2) substantially perpendicular to axis (4) of the tube.

11. Device in accordance with Claim 9, characterized in that tube (2) has a circular cross-section.

12. Device in accordance with Claim 11, characterized in that said spots (9) of the screen are circular and are distributed in central region (9'), coaxially with tube (2), and that spots (9) are evenly distributed in circles (10) which are concentric with the aforesaid central region.

13. Device in accordance with Claim 12, characterized in that the diameters of spots (9) located on the same circle (10) are substantially equal.

14. Device in accordance with Claim 12, characterized in that the diameters of spots (9) located on circles (10) closest to the rim of screen (11) become progressively smaller in size as the diameters of the circles increase.

15. Device in accordance with Claim 12, characterized in that aforesaid spots (9) of the screen encircling the above-mentioned central region (9') are distributed around six circles (10), the first of which - the one with the smallest diameter - has a diameter slightly larger than the diameter of aforesaid central region (9'), the distance separating the first circle from the second circle being substantially equal to the diameter of said central region (9'), whereas the distances between the other four circles (10) are substantially equal; the sixth circle - the one with the largest diameter - , together with center (3) of cell (1), defines a conical opening of approximately 36°.

16. Device in accordance with Claim 15, characterized in that at least aforesaid spots (9) distributed on the second through the sixth circles are substantially in radial alignment, the angles formed by the rays being substantially equal and approximately 15° in magnitude.

17. Device in accordance with Claim 15, characterized in that the surface area of said central region (9') is, for a screen (11) with a surface area of 5,944 mm², approximately 46 mm², the surface areas of spots (9) distributed around the first to the sixth circles being, respectively, 0.65 mm ², 0.65 mm², 0.65 mm², 0.43 and 0.65 mm² alternately, 0.43 mm² and 0.43 mm², and the total surface area of the aforesaid spots (9 and 9') being approximately 103 mm².

18. Device in accordance with Claim 9, characterized in that aforesaid screen (11) is fabricated from a translucent material, such as glass, made partially opaque via a silk-screen process.

19. Device in accordance with Claim 9, characterized in that aforesaid screen (11) is fabricated from sheet metal drilled with holes which form the above-mentioned spots.

## Patentansprüche

1. Meßverfahren zur Messung der Leuchtdichte, insbesondere zur Messung der Leuchtdichte vor dem Einfahrtsbereich in einen Tunnel für Kraftfahrzeuge, von welcher aus ausgehend die minimale Leuchtdichte bestimmt wird, die im Tunnel einzustellen ist, mittels einer Photozelle (1), die derart in einer Blindröhre (2) angeordnet ist, daß die Zelle auf Leuchtdichten eines Kegels reagiert, der durch den Mittelpunkt (3) der Zelle, die auf der Achse (4) der Röhre angeordnet ist und die Spitze des Kegels definiert und wenigstens der Öffnung (5) der Röhre gebildet wird,
**dadurch gekennzeichnet**,
daß es darin besteht, die Zahl der Lichtstrahlen, die dem Kegel folgend in die Röhre eintreten, zu begrenzen.

2. Meßverfahren nach Anspruch 1,
**dadurch gekennzeichnet**,
daß die Zahl der besagten Lichtstrahlen, die in den Kegel eintreten, in Abhängigkeit ihres Einfallswinkels selektiert wird.

3. Meßverfahren nach Anspruch 2,
**dadurch gekennzeichnet**,
daß die Zahl der in den besagten Kegel eintretenden Lichtstrahlen progressiv mit der Größe ihres Einfallswinkels abnimmt.

4. Meßverfahren nach einem der Ansprüche 1 bis 3,
**dadurch gekennzeichnet**,
daß der besagte Kegel ein Kreiskegel und daß die Öffnung (5) der Röhre kreisförmig ist.

5. Meßverfahren nach Anspruch 4,
**dadurch gekennzeichnet**,
daß der Eintritt der Lichtstrahlen in den besagten Kegel entlang dessen Achse zugelassen wird, wobei die einfallenden Lichtstrahlen an stellen (9) in den Kegel eintreten, die regelmäßig auf Kreisen angeordnet sind, deren Mittelpunkte auf der Achse (4) der Röhre (2) liegen.

6. Meßverfahren nach Anspruch 5,
**dadurch gekennzeichnet**,
daß die Querschnitte der Stellen (9) durch die die in den Kegel einfallenden Lichtstrahlen eintreten und die regelmäßig auf den besagten Kreisen (10) angeordnet sind, auf jeden Kreis gleich sind und in dem Maße abnehmen, in dem die Durchmesser der Kreise (10) anwachsen.

7. Meßverfahren nach Anspruch 5 oder 6,
**dadurch gekennzeichnet**,
daß die besagten Stellen (9) auf einer senkrecht zu der Achse (4) der Röhre (2) stehenden Ebene und den Kreisen (10) folgend, die konzentrisch sind, angeordnet sind, wobei die Stellen (9) im wesentlichen radial fluchten.

8. Meßverfahren nach einem der Ansprüche 4 bis 7,
**dadurch gekennzeichnet**,
daß der Öffnungswinkel des besagten Winkels eine Größe von 36° hat.

9. Vorrichtung für die Messung der Leuchtdichte für ein Verfahren nach einem der Ansprüche 1 bis 8,
**dadurch gekennzeichnet**,
daß es aus einer Blindröhre (2) besteht, in der eine Photozelle (1) angeordnet ist, so daß einerseits ihr Mittelpunkt (3) auf der Achse (4) der besagten Röhre liegt und andererseits dieser Mittelpunkt (3) und die Öffnung (5) der Röhre den besagten Kegel bildet, sowie einer lichtundurchlässigen Scheibe (11), die in der Nähe der Öffnung (5) in der Röhre (2) angeordnet ist, um die Gesamtheit der Lichtstrahlen, die auf die Zelle treffen können und in dem Kegel vorhanden sind, zu unterbrechen, wobei diese Scheibe (11) mit Bereichen (9) ausgestattet ist, die es bestimmten Lichtstrahlen erlauben, in das Innere des besagten Kegels zu treten und die vorgenannte Zelle zu beeinflussen.

10. Vorrichtung nach Anspruch 9,
**dadurch gekennzeichnet**,
daß die besagte Scheibe (11) eben ist und in der Röhre (2) im wesentlichen senkrecht zur Achse (4) der letzteren ausgerichtet ist.

11. Vorrichtung nach Anspruch 9 oder 10,
**dadurch gekennzeichnet**,
daß die Röhre (2) einen kreisförmigen Querschnitt aufweist.

12. Vorrichtung nach Anspruch 11,
**dadurch gekennzeichnet**,
daß die besagten Bereiche (9) der Scheibe kreisförmig sind und in einen zentralen Bereich (9'), der koaxial zur Röhre (2) ausgerichtet ist, sowie in regelmäßig angeordnete, auf konzentrisch zu besagtem zentralen Bereich verlaufenden Kreisen (10) liegende Bereiche (9) aufgeteilt sind.

13. Vorrichtung nach Anspruch 12,
**dadurch gekennzeichnet**,
daß die Durchmesser der Bereiche, die auf einem Kreis (10) angeordnet sind, im wesentlichen gleich sind.

14. Vorrichtung nach Anspruch 12 oder 13,
**dadurch gekennzeichnet**,
daß die Durchmesser der Bereiche (9), die auf den Kreisen liegen, die dem Rand der Scheibe (11) näher kommen, in dem Maße abnehmen, wie die Durchmesser der Kreise zunehmen.

15. Vorrichtung nach einem der Ansprüche 12 bis 14,
**dadurch gekennzeichnet**,
daß die besagten Bereiche (9) der Scheibe, die um den vorgenannten zentralen Bereich (9') herum angeordnet sind, auf sechs Kreise (10) aufgeteilt sind, dessen erster, mit dem kleinsten Durchmesser, einen Durchmesser aufweist, der nur wenig größer ist, als der Durchmesser des zentralen Bereichs (9'), wobei der Abstand zwischen dem ersten und dem zweiten Kreis im wesentlichen dem Durchmesser des zentralen Bereichs (9') entspricht, wahrend die Abstände zwischen den anderen vier Kreisen im wesentlichen gleich sind und der sechste Kreis, mit dem größten Durchmesser, mit dem Mittelpunkt (3) der Zelle (1) einen Kegel mit einem Öffnungswinkel von 36° bildet.

16. Vorrichtung nach Anspruch 15,
**dadurch gekennzeichnet**,
daß wenigstens die Bereiche (9) auf den zweiten bis sechsten Kreisen im wesentlichen radial fluchten, wobei die Winkel, die durch die Reihen gebildete werden im wesentlichen gleich sind und bei 15° liegen.

17. Vorrichtung nach einem der Ansprüche 15 und 16,
**dadurch gekennzeichnet**,
daß bei einer Scheibe (11) von 5.944 mm² Fläche der zentrale Bereich (9') eine Fläche von 46 mm² und die Flächen der besagten Bereiche (9), die auf die ersten bis sechsten Kreise aufgeteilt sind, jeweils 0,65 mm², 0,65 mm², 0,65 mm², 0,43 mm² oder 0,65 mm², 0,43 mm², und 0,43 mm² aufweisen, wobei die gesamte Fläche der Bereiche (9 und 9') 103 mm² beträgt.

18. Vorrichtung nach einem der Ansprüche 9 bis 17,
**dadurch gekennzeichnet**,
daß die besagte Scheibe (11) aus einem durchsichtigen Material wie Glas besteht, das durch Siebdruck teilweise undurchsichtig gemacht ist.

19. Vorrichtung nach einem der Ansprüche 9 bis 17,
**dadurch gekennzeichnet**,
daß die Scheibe (11) aus einem Blech mit Löchern, die die besagten Bereiche bilden, besteht.
